(19) Europäisches Patentamt
European Patent Office
Office européen des brevets

(11) EP 4 745 187 A1

(12) # EUROPEAN PATENT APPLICATION
published in accordance with Art. 153(4) EPC

(43) Date of publication:
**20.05.2026 Bulletin 2026/21**

(21) Application number: **24843002.7**

(22) Date of filing: **08.07.2024**

(51) International Patent Classification (IPC):
***C08L 9/00*** (2006.01) ***B60C 1/00*** (2006.01)
***C08F 8/34*** (2006.01) ***C08F 8/42*** (2006.01)
***C08K 3/04*** (2006.01) ***C08K 3/36*** (2006.01)
***C08L 7/00*** (2006.01) ***C08L 15/00*** (2006.01)

(52) Cooperative Patent Classification (CPC):
**B60C 1/00; C08F 8/34; C08F 8/42; C08K 3/04; C08K 3/36; C08L 7/00; C08L 9/00; C08L 15/00**

(86) International application number:
**PCT/JP2024/024599**

(87) International publication number:
**WO 2025/018210 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 JP 2023116219**

(71) Applicant: **Kuraray Co., Ltd.**
**Kurashiki-shi, Okayama 710-0801 (JP)**

(72) Inventors:
- **KANEKO, Shuhei**
  **Kamisu-shi, Ibaraki 314-0197 (JP)**
- **KANBARA, Hiroshi**
  **Kamisu-shi, Ibaraki 314-0197 (JP)**
- **UEHARA, Yosuke**
  **Kamisu-shi, Ibaraki 314-0197 (JP)**

(74) Representative: **Müller-Boré & Partner Patentanwälte PartG mbB**
**Friedenheimer Brücke 21**
**80639 München (DE)**

(54) **RUBBER COMPOSITION FOR SIDEWALLS, AND SIDEWALL**

(57) Provided are a rubber composition for a sidewall, the rubber composition being capable of producing a sidewall that has excellent resistance to flexural fatigue and is capable of improving low fuel consumption performance, and a sidewall formed at least in part from the rubber composition.

A rubber composition for a sidewall contains 0.1 to 30 parts by mass of a modified liquid diene-based rubber (B) having a functional group derived from a silane compound satisfying specific conditions, and 5 to 80 parts by mass of a specific filler (C) including a specific silica (C1), with respect to 100 parts by mass of a solid rubber (A) containing natural rubber and/or isoprene rubber (A1) and butadiene rubber (A2).



Processed by Luminess, 75001 PARIS (FR)

## Description

### Technical Field

The present invention relates to a rubber composition for a sidewall, and a sidewall formed at least in part from the rubber composition.

### Background Art

Conventionally, rubber compositions containing, for example, a solid rubber, a liquid diene-based rubber, and a filler have been studied as materials to be used for various tire components including a tread and a sidewall because they can maintain or improve various properties while improving processability.

In recent years, improvement of low fuel consumption performance is also required for tires from the viewpoint of reducing environmental load. From the viewpoint of improving the low fuel consumption performance, a rubber composition containing a solid rubber and silica has been studied as a material for use in a tire tread. For example, a rubber composition containing a solid rubber, a specific modified liquid diene-based rubber, and a filler has been studied as a material suitably used in the tread of a heavy load tire, which is subjected to high loads, such as a bus or a truck (see Patent Literature 1).

The tire is composed of various components in addition to the tread described above, and it is desirable that each component has properties corresponding to its role. For example, in a sidewall, which is an example of a tire component, improvement in properties different from those of the tread, such as weather resistance and resistance to flexural fatigue, is required.

For example, in order to obtain a sidewall exhibiting both weather resistance and good appearance, a rubber composition containing a diene-based rubber component, a reinforcing filler, and a specific liquid diene-based rubber has been studied (see Patent Literature 2).

### Citation List

#### Patent Literature

Patent Literature 1: WO 2019/044892 A
Patent Literature 2: JP 2008-120895 A

### Summary of Invention

#### Technical Problem

As for the improvement of the low fuel consumption performance of a tire, efforts have mainly focused on improving the low fuel consumption performance of the tread. However, the tire includes various components in addition to the above-described tread. Therefore, in order to further improve the low fuel consumption performance of the tire, it is also desired to improve the low fuel consumption performance in tire components other than the tread, such as the sidewall.

In general, examples of the rubber composition capable of improving the low fuel consumption performance of a tire include a rubber composition containing a solid rubber and a filler (typically silica). In particular, when such a rubber composition is used in a sidewall, it is considered effective to reduce friction between filler particles, which is a main cause of energy loss, in order to suppress energy loss. In order to reduce friction, a rubber composition containing a solid rubber and a filler (typically silica) having a small surface area which corresponds to a large particle diameter, is considered useful. However, when the solid rubber merely contains a filler (typically silica) with a large particle diameter, the sidewall obtained using the rubber composition does not necessarily have sufficient resistance to flexural fatigue, in part due to the insufficient affinity between the solid rubber and the filler. Therefore, there has been a demand for a rubber composition capable of improving low fuel consumption performance while maintaining the properties required for a sidewall.

The present invention has been made in view of the above circumstances, and provides a rubber composition for a sidewall, the rubber composition being capable of producing a sidewall that has excellent resistance to flexural fatigue and is capable of improving low fuel consumption performance, and a sidewall formed at least in part from the rubber composition.

Solution to Problem

As a result of intensive studies, the present inventors have found that, by producing a sidewall at least in part from a rubber composition containing a specific solid rubber, a specific modified liquid diene-based rubber, and a filler, the resulting sidewall has excellent resistance to flexural fatigue, and further has improved low fuel consumption performance, thereby completing the present invention.

That is, the present invention relates to the following [1] to [6].

[1] A rubber composition for a sidewall, the rubber composition containing: 0.1 to 30 parts by mass of a modified liquid diene-based rubber (B) having a functional group derived from a silane compound represented by the following Formula (1); and 5 to 80 parts by mass of a filler (C), with respect to 100 parts by mass of a solid rubber (A) containing natural rubber and/or isoprene rubber (A1) and butadiene rubber (A2),

in which the filler (C) includes silica (C1), and a BET specific surface area of the silica (C1) is less than 170 ($m^2/g$), and
the modified liquid diene-based rubber (B) satisfies the following (i) to (iii):

(i) a weight average molecular weight (Mw) is 3,000 or more and 120,000 or less,
(ii) a vinyl content is 70 mol% or less, and
(iii) an average number of functional groups derived from the silane compound per molecule of the modified liquid diene-based rubber (B) is 1 to 20.

[Chem. 1]

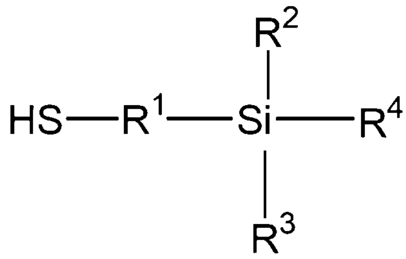

(1)

In Formula (1), $R^1$ is a divalent alkylene group having 1 to 6 carbon atoms, and $R^2$, $R^3$, and $R^4$ each independently represent a methoxy group, an ethoxy group, a phenoxy group, a methyl group, an ethyl group, or a phenyl group. Provided that at least one of $R^2$, $R^3$, and $R^4$ is a methoxy group, an ethoxy group, or a phenoxy group.

[2] The rubber composition for a sidewall according to [1], in which the modified liquid diene-based rubber (B) has a melt viscosity at 38°C of 0.1 to 4,000 Pa·s.
[3] The rubber composition for a sidewall according to [1] or [2], in which the filler (C) further includes carbon black (C2).
[4] The rubber composition for a sidewall according to any one of [1] to [3], in which a mass ratio (A1)/(A2) of the natural rubber and/or the isoprene rubber (A1) to the butadiene rubber (A2) contained in the solid rubber (A) is 20/80 or more and 60/40 or less.
[5] A crosslinked product obtained by crosslinking the rubber composition for a sidewall according to any one of [1] to [4].
[6] A sidewall formed at least in part from the rubber composition for a sidewall according to any one of [1] to [5].

Advantageous Effects of Invention

According to the present invention, there is provided a rubber composition for a sidewall, which enables the production of a sidewall having excellent resistance to flexural fatigue and improved low fuel consumption performance, and a sidewall formed at least in part from the rubber composition.

Description of Embodiments

[Solid rubber (A)]

A solid rubber (A) used in a rubber composition for a sidewall of the present invention refers to a rubber that can be handled in a solid state at 20°C. The Mooney viscosity $ML_{1+4}$ of the solid rubber (A) at 100°C is usually in the range of 20 to 200, and is usually selected from at least one of synthetic rubber and natural rubber.
The solid rubber (A) contained in the rubber composition for a sidewall of the present invention contains natural rubber and/or isoprene rubber (A1) and butadiene rubber (A2).

[Natural rubber and/or isoprene rubber (A1)]

Examples of natural rubber that can serve as the natural rubber and/or the isoprene rubber (A1) (hereinafter, also referred to as "component (A1)") include unmodified natural rubbers, such as TSRs (Technically Specified Rubbers) including SMR (Malaysian TSR), SIR (Indonesian TSR), and STR (Thai TSR), and RSS (Ribbed Smoked Sheet), which are commonly used in the tire industry, as well as high-purity natural rubber; and modified natural rubbers, such as epoxidized natural rubber, hydroxylated natural rubber, hydrogenated natural rubber, and grafted natural rubber. Among them, unmodified natural rubbers are preferable from the viewpoint of processability, and SMR 20, STR 20, and RSS #3 are more preferable from the viewpoints of reduced variation in quality and ease of availability.
These natural rubbers may be used alone or in combination with two or more types thereof.
Examples of the isoprene rubber that can be used as the component (A1) include commercially available isoprene rubbers polymerized using, for example, a Ziegler-type catalyst such as a titanium tetrahalide-trialkylaluminum-based catalyst, a diethylaluminum chloride-cobalt-based catalyst, a trialkylaluminum-boron trifluoride-nickel-based catalyst, or a diethylaluminum chloride-nickel-based catalyst; a lanthanoid-based rare earth metal catalyst such as a triethylaluminum-organic acid neodymium-Lewis acid-based catalyst; or an organoalkali metal compound, similarly to solution-polymerized styrene-butadiene rubber (S-SBR). Among them, isoprene rubber polymerized using a Ziegler-type catalyst is preferable because of its high cis content. In addition, as the isoprene rubber, an isoprene rubber having an ultra-high cis content obtained using a lanthanoid-based rare earth metal catalyst may be used.
The vinyl content of the isoprene rubber is preferably 50 mol% or less, more preferably 40 mol% or less, and still more preferably 30 mol% or less. When the vinyl content exceeds 50 mol%, rolling resistance performance tends to deteriorate. The lower limit of the vinyl content is not particularly limited. In addition, the glass transition temperature varies depending on the vinyl content, and is preferably -20°C or lower, and more preferably -30°C or lower. The vinyl content refers to a proportion (mol%) of the total of structural units derived from 1,2-bonding or 3,4-bonding (structural units other than 1,4-bonding) relative to 100 mol% of the total of structural units derived from isoprene contained in the isoprene rubber.
The weight average molecular weight (Mw) of the isoprene rubber is preferably 90,000 to 2,000,000, and more preferably 150,000 to 1,500,000. When the Mw is within the above range, the processability and the mechanical strength are excellent.
A part of the isoprene rubber may have a branched structure or a polar functional group introduced by using a modifying agent, such as a polyfunctional modifying agent, for example, tin tetrachloride, silicon tetrachloride, an alkoxysilane having an epoxy group in the molecule, or an amino group-containing alkoxysilane, as long as the effect of the present invention is not impaired. From the viewpoint of processability, the isoprene rubber preferably does not have a polar functional group.
These isoprene rubbers may be used alone or in combination with two or more types thereof.
The components (A1) may be used alone as natural rubber or isoprene rubber, or may be used as a mixture of natural rubber and isoprene rubber. From the viewpoint of mechanical strength, the component (A1) is preferably natural rubber.

[Butadiene rubber (A2)]

Examples of the butadiene rubber (A2) include commercially available butadiene rubbers polymerized using, for example, a Ziegler-type catalyst such as a titanium tetrahalide-trialkylaluminum-based catalyst, a diethylaluminum chloride-cobalt-based catalyst, a trialkylaluminum-boron trifluoride-nickel-based catalyst, or a diethylaluminum chloride-nickel-based catalyst; a lanthanoid-based rare earth metal catalyst such as a triethylaluminum-organic acid neodymium-Lewis acid-based catalyst; or an organoalkali metal compound, similarly to S-SBR. Among them, butadiene rubber polymerized using a Ziegler-type catalyst is preferable because of its high cis content. In addition, butadiene rubber having an ultrahigh cis content (for example, a cis content of 95% or more) obtained using a lanthanoid-based rare earth metal catalyst may be used as the butadiene rubber (A2).
The vinyl content of the butadiene rubber (A2) is preferably 50 mol% or less, more preferably 40 mol% or less, and still more preferably 30 mol% or less. When the vinyl content exceeds 50 mol%, rolling resistance performance (low fuel

consumption performance) tends to deteriorate. The lower limit of the vinyl content is not particularly limited. In addition, the glass transition temperature varies depending on the vinyl content, and is preferably -40°C or lower, and more preferably -50°C or lower. The vinyl content refers to a proportion (mol%) of the total of structural units of 1,2-bonding (structural units other than 1,4-bonding) relative to 100 mol% of the total of structural units derived from butadiene contained in the butadiene rubber.

The weight average molecular weight (Mw) of the butadiene rubber (A2) is preferably 90,000 to 2,000,000, and more preferably 150,000 to 1,500,000. When the Mw is within the above range, the processability of the rubber composition for a sidewall is improved, and the resistance to flexural fatigue of a sidewall partially formed from the rubber composition for a sidewall is also improved.

A part of the butadiene rubber (A2) may have a branched structure or a polar functional group introduced by using a modifying agent, such as a polyfunctional modifying agent, for example, tin tetrachloride, silicon tetrachloride, an alkoxysilane having an epoxy group in the molecule, or an amino group-containing alkoxysilane, as long as the effect of the present invention is not impaired. From the viewpoint of processability, the butadiene rubber (A2) preferably does not have a polar functional group.

These butadiene rubbers (A2) may be used alone or in combination with two or more types thereof.

The total content of the component (A1) and the butadiene rubber (A2) in 100 mass% of the solid rubber (A) is preferably 80 mass% or more, and more preferably 90 mass% or more, from the viewpoint of being capable of producing a sidewall having more excellent resistance to flexural fatigue and having further improved low fuel consumption performance. In addition, from the same viewpoint, it is preferable that the total content of the component (A1) and the butadiene rubber (A2) in 100 mass% of the solid rubber (A) is 100 mass%, that is, the solid rubber (A) is composed only of the component (A1) and the butadiene rubber (A2).

The mass ratio (A1)/(A2) of the component (A1) to the butadiene rubber (A2) contained in the solid rubber (A) is preferably 20/80 or more and 60/40 or less, more preferably 25/75 or more and 55/45 or less, still more preferably 30/70 or more and 50/50 or less, and even still more preferably 40/60 or more and 50/50 or less, from the viewpoint of being capable of producing a sidewall having more excellent resistance to flexural fatigue and having further improved low fuel consumption performance.

The solid rubber (A) may contain a solid rubber other than the component (A1) and the butadiene rubber (A2) as long as the effect of the present invention is not impaired. Examples of the solid rubber other than the component (A1) and the butadiene rubber (A2) include styrene-butadiene rubber (hereinafter, also referred to as "SBR"), butyl rubber, halogenated butyl rubber, ethylene-propylene diene rubber, butadiene-acrylonitrile copolymer rubber, chloroprene rubber, acrylic rubber, fluororubber, and urethane rubber.

When the solid rubber (A) includes a solid rubber other than the component (A1) and the butadiene rubber (A2), the content of the solid rubber other than the component (A1) and the butadiene rubber (A2) in 100 mass% of the solid rubber (A) is preferably 20 mass% or less, and more preferably 10 mass% or less.

[Modified liquid diene-based rubber (B)]

The modified liquid diene-based rubber (B) used in the rubber composition for a sidewall of the present invention is a liquid polymer, and has a functional group derived from a silane compound (hereinafter, also referred to as "silane compound (1)") represented by Formula (1) described below. In addition, the modified liquid diene-based rubber (B) refers to a rubber having a weight average molecular weight (Mw) of 3,000 or more and 120,000 or less (requirement (i)), a vinyl content of 70 mol% or less (requirement (ii)), and an average number of functional groups derived from the silane compound (1) per molecule of the modified liquid diene-based rubber (B) of 1 to 20 (requirement (iii)). When the modified liquid diene-based rubber (B) is contained in the rubber composition for a sidewall of the present invention, the dispersibility of the filler (C) in the rubber composition and the interaction between the filler (C) and the solid rubber (A) are improved. In addition, the sidewall formed at least in part from the rubber composition has excellent resistance to flexural fatigue, and has improved low fuel consumption performance.

An unmodified liquid diene-based rubber (B') serving as a raw material for the modified liquid diene-based rubber (B) contains conjugated diene units as monomer units constituting the polymer. Examples of the conjugated diene include butadiene and isoprene; and conjugated dienes (b1) other than butadiene and isoprene, such as 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene ($\alpha$-farnesene or $\beta$-farnesene), and chloroprene. The conjugated diene units contained in the unmodified liquid diene-based rubber (B') preferably include at least one selected from the group consisting of butadiene units, isoprene units, and $\beta$-farnesene units, preferably include at least one selected from the group consisting of butadiene units and isoprene units, more preferably consist solely of at least one selected from the group consisting of butadiene units and isoprene units, and still more preferably consist solely of butadiene units.

In the unmodified liquid diene-based rubber (B') serving as a raw material for the modified liquid diene-based rubber (B), the content of the conjugated diene units is preferably 50 mass% or more, more preferably 60 to 100 mass%,

and still more preferably 70 to 100 mass% with respect to 100 mass% of all monomer units constituting the polymer. In addition, it is a preferred embodiment that the unmodified liquid diene-based rubber (B') consists solely of conjugated diene units as monomer units (the conjugated diene units account for 100 mass% of all monomer units).

In addition, in the unmodified liquid diene-based rubber (B') serving as a raw material for the modified liquid diene-based rubber (B), it is preferable that 50 mass% or more of all monomer units constituting the polymer are monomer units of at least one conjugated diene (b1) selected from the group consisting of butadiene and isoprene. The content of the monomer units of at least one conjugated diene (b1) selected from the group consisting of butadiene and isoprene is preferably 60 to 100 mass%, and more preferably 70 to 100 mass%, with respect to the total monomer units of the unmodified liquid diene-based rubber (B').

Examples of the monomer units other than the conjugated diene units that can be contained in the unmodified liquid diene-based rubber (B') include aromatic vinyl compound (b2) units.

Examples of the aromatic vinyl compound (b2) include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. Among these aromatic vinyl compounds, at least one selected from styrene, α-methylstyrene, and 4-methylstyrene is preferable.

When the unmodified liquid diene-based rubber (B') contains two or more types of monomer units, the bonding mode thereof may be a random copolymer or a block copolymer. When the unmodified liquid diene-based rubber (B') is a block copolymer, the block copolymer preferably contains a polymer block composed solely of butadiene units and a polymer block composed solely of isoprene units, and in the case of the block copolymer, the content of the butadiene units in 100 mass% of all monomer units contained in the unmodified liquid diene-based rubber (B') is preferably 50 mass% or less, more preferably 45 mass% or less, and still more preferably 40 mass% or less.

The content of monomer units other than the conjugated diene, such as the aromatic vinyl compound (b2), in the unmodified liquid diene-based rubber (B'), is preferably 50 mass% or less, more preferably 40 mass% or less, and still more preferably 30 mass% or less, with respect to 100 mass% of all monomer units contained in the unmodified liquid diene-based rubber (B'). For example, when the aromatic vinyl compound (b2) units are within the above range, the processability of the rubber composition tends to be improved.

The unmodified liquid diene-based rubber (B') is preferably a polymer obtained by polymerizing a conjugated diene and, if necessary, other monomers other than the conjugated diene, using, for example, an emulsion polymerization method or a solution polymerization method.

A known method or a method analogous to a known method can be employed as the emulsion polymerization method. For example, a monomer containing a predetermined amount of the conjugated diene is emulsified and dispersed in the presence of an emulsifier, and emulsion-polymerized by a radical polymerization initiator.

Examples of the emulsifier include a long-chain fatty acid salt having 10 or more carbon atoms and a rosin acid salt. Examples of the long-chain fatty acid salt include potassium salts or sodium salts of fatty acids such as capric acid, lauric acid, myristic acid, palmitic acid, oleic acid, and stearic acid.

As a dispersion medium, water is usually used, and a water-soluble organic solvent such as methanol or ethanol may be contained to the extent that stability during polymerization is not inhibited.

Examples of the radical polymerization initiator include persulfates such as ammonium persulfate and potassium persulfate, organic peroxides, and hydrogen peroxide.

In order to adjust the molecular weight of the obtained unmodified liquid diene-based rubber (B'), a chain transfer agent may be used. Examples of the chain transfer agent include mercaptans such as t-dodecyl mercaptan and n-dodecyl mercaptan; carbon tetrachloride, thioglycolic acid, diterpenes, terpinolene, γ-terpinene, and α-methylstyrene dimers.

The temperature of the emulsion polymerization can be appropriately set depending on, for example, the type of the radical polymerization initiator to be used, and is usually in the range of 0 to 100°C, and preferably in the range of 0 to 60°C. The polymerization mode may be either continuous polymerization or batch polymerization.

The polymerization reaction can be terminated by addition of a polymerization terminator. Examples of the polymerization terminator include amine compounds such as isopropylhydroxylamine, diethylhydroxylamine, and hydroxylamine, quinone-based compounds such as hydroquinone and benzoquinone, and sodium nitrite.

After the polymerization reaction is terminated, an antidegradant may be added as necessary. After the polymerization reaction is terminated, unreacted monomers are removed from the obtained latex as necessary, then the unmodified liquid diene-based rubber (B') is coagulated using a salt such as sodium chloride, calcium chloride, or potassium chloride as a coagulant while a pH of the coagulation system is adjusted to a predetermined value by adding an acid such as nitric acid or sulfuric acid as necessary, and then the dispersion medium is separated to recover the polymer. Next, the unmodified liquid diene-based rubber (B') is obtained by washing with water, then dehydrating, and thereafter drying. Note that, at the time of coagulation, the latex may, as necessary, be previously mixed with an extending oil formed into an emulsified dispersion and recovered as an oil-extended unmodified liquid diene-based rubber (B')

A known method or a method analogous to a known method can be employed as the solution polymerization method. For example, a monomer containing a conjugated diene is polymerized in a solvent using a Ziegler-type catalyst, a metallocene-type catalyst, or an active metal or an active metal compound capable of anionic polymerization, optionally in the presence of a polar compound.

Examples of the solvent include aliphatic hydrocarbons such as n-butane, n-pentane, isopentane, n-hexane, n-heptane, and isooctane; alicyclic hydrocarbons such as cyclopentane, cyclohexane, and methylcyclopentane; and aromatic hydrocarbons such as benzene, toluene, and xylene.

Examples of active metals capable of anionic polymerization include alkali metals such as lithium, sodium, and potassium; alkaline earth metals such as beryllium, magnesium, calcium, strontium, and barium; and lanthanoid-based rare earth metals such as lanthanum and neodymium. Among the active metals capable of anionic polymerization, alkali metals and alkaline earth metals are preferable, and alkali metals are more preferable.

The active metal compound capable of anionic polymerization is preferably an organoalkali metal compound. Examples of the organoalkali metal compound include organomonolithium compounds such as methyl lithium, ethyl lithium, n-butyl lithium, sec-butyl lithium, t-butyl lithium, hexyl lithium, phenyl lithium, and stilbenyl lithium; polyfunctional organolithium compounds such as dilithiomethane, dilithionaphthalene, 1,4-dilithiobutane, 1,4-dilithio-2-ethylcyclohexane, and 1,3,5-trilithiobenzene; sodium naphthalene, and potassium naphthalene. Among these organoalkali metal compounds, organolithium compounds are preferable, and organomonolithium compounds are more preferable.

The amount of the organoalkali metal compound used can be appropriately set according to, for example, the melt viscosity and the molecular weight of the unmodified liquid diene-based rubber (B') and the modified liquid diene-based rubber (B). For example, the organoalkali metal compound is usually used in an amount of 0.01 to 3 parts by mass with respect to 100 parts by mass of the total monomers containing a conjugated diene.

The organoalkali metal compound can also be used as an organoalkali metal amide by reacting with a secondary amine such as dibutylamine, dihexylamine, or dibenzylamine.

The polar compound is usually used for adjusting the microstructure (for example, vinyl content) of the conjugated diene unit without deactivating the reaction in the anionic polymerization. Examples of the polar compound include ether compounds such as dibutyl ether, tetrahydrofuran, and ethylene glycol diethyl ether; tertiary amines such as N,N,N',N'-tetramethylethylenediamine and trimethylamine; alkali metal alkoxides, and phosphine compounds. The polar compound is usually used in an amount of 0.01 to 1,000 mol with respect to 1 mol of the organoalkali metal compound.

The temperature of the solution polymerization is usually in the range of -80 to 150°C, preferably in the range of 0 to 100°C, and more preferably in the range of 10 to 90°C. The polymerization mode may be either continuous polymerization or batch polymerization.

The polymerization reaction can be terminated by addition of a polymerization terminator. Examples of the polymerization terminator include alcohols such as methanol and isopropanol. The obtained polymerization reaction solution is poured into a poor solvent such as methanol to precipitate the unmodified liquid diene-based rubber (B'), or the polymerization reaction solution is washed with water, separated, and then dried, such that the unmodified liquid diene-based rubber (B') can be isolated.

As a method for producing the unmodified liquid diene-based rubber (B'), the solution polymerization method is preferable among the above methods.

The unmodified liquid diene-based rubber (B') thus obtained is preferably modified directly, without hydrogenation, by a functional group derived from a silane compound represented by Formula (1) described below so that a sidewall having excellent flexural fatigue resistance and improved low fuel consumption performance can be more easily produced.

In addition, the unmodified liquid diene-based rubber (B') is preferably not modified with a functional group (for example, a hydroxyl group) other than the functional group derived from the silane compound represented by Formula (1) described below from the viewpoint of exhibiting the characteristics of the functional group derived from the silane compound represented by Formula (1) described below in a more preferred state. Since the unmodified liquid diene-based rubber (B') is not modified with other functional groups, the resulting modified liquid diene-based rubber (B) tends to exhibit improved stability. In addition, the interaction (for example, reactivity) of the functional group derived from the silane compound represented by Formula (1) in the obtained modified liquid diene-based rubber (B) with the filler (C) (for example, silica) tends to be superior.

The unmodified liquid diene-based rubber (B') is modified with a functional group derived from a silane compound represented by the following Formula (1) (hereinafter, also referred to as "silane compound (1)"), and used as a modified liquid diene-based rubber (B). That is, the modified liquid diene-based rubber (B) has a functional group derived from a silane compound represented by the following Formula (1) (silane compound (1)).

[Chem. 2]

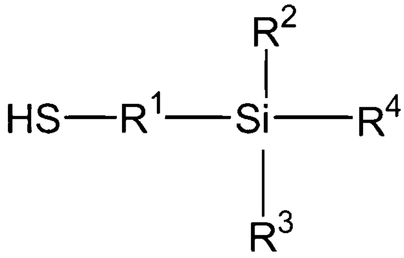

(1)

In Formula (1), $R^1$ is a divalent alkylene group having 1 to 6 carbon atoms. Examples of the divalent alkylene group having 1 to 6 carbon atoms include a methylene group, an ethylene group, a propylene group, a butylene group, a pentylene group, and a hexylene group. $R^2$, $R^3$, and $R^4$ each independently represent a methoxy group, an ethoxy group, a phenoxy group, a methyl group, an ethyl group, or a phenyl group. However, at least one of $R^2$, $R^3$, and $R^4$ must be a methoxy group, an ethoxy group, or a phenoxy group.

Examples of the silane compound (1) include mercaptomethylene methyl diethoxysilane, mercaptomethylene triethoxysilane, 2-mercaptoethyl trimethoxysilane, 2-mercaptoethyl triethoxysilane, 2-mercaptoethyl methoxydimethylsilane, 2-mercaptoethyl ethoxydimethylsilane, 3-mercaptopropyl trimethoxysilane, 3-mercaptopropyl triethoxysilane, 3-mercaptopropyl dimethoxymethylsilane, 3-mercaptopropyl diethoxymethylsilane, 3-mercaptopropyl dimethoxyethylsilane, 3-mercaptopropyl diethoxyethylsilane, 3-mercaptopropyl methoxydimethylsilane, and 3-mercaptopropyl ethoxydimethylsilane. These silane compounds may be used alone or in combination with two or more types thereof.

When the mercapto group (-SH) of the silane compound (1) undergoes a radical addition reaction with a carbon-carbon unsaturated bond contained in the unmodified liquid diene-based rubber (B'), a modified liquid diene-based rubber (B) having a functional group derived from the silane compound (1), specifically, a substructure represented by the following Formula (2) as the functional group, is obtained.

[Chem. 3]

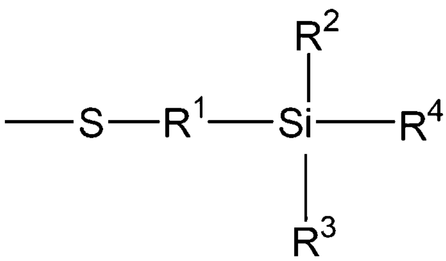

(2)

The definitions and specific examples of $R^1$, $R^2$, $R^3$, and $R^4$ in Formula (2) are the same as the definitions and specific examples of $R^1$, $R^2$, $R^3$, and $R^4$ in Formula (1).

The average number of functional groups per molecule of the modified liquid diene-based rubber (B) having a functional group derived from the silane compound (1) is 1 to 20 (requirement (iii)). When the average number of functional groups is less than 1, the affinity with the filler (C) is low, preventing improvement of the filler dispersibility in the rubber composition, and making it difficult to produce a sidewall having excellent resistance to flexural fatigue and capable of enhancing low fuel consumption performance. On the other hand, when the average number of functional groups exceeds 20, it is difficult to produce a sidewall having excellent resistance to flexural fatigue from the rubber composition. The average number of functional groups per molecule of the modified liquid diene-based rubber (B) having the functional group derived from the silane compound (1) is preferably 1 to 15, more preferably 1 to 12, still more preferably 1 to 9, even more preferably 1 to 5, particularly preferably 1 to 4, and more particularly preferably 2 to 4, since the obtained sidewall tends to exhibit superior resistance to flexural fatigue and tends to exhibit improved low fuel consumption performance.

The average number of functional groups per molecule of the modified liquid diene-based rubber (B) can be determined by the following formula, using the equivalent weight (g/eq) of the functional groups of the modified liquid diene-based rubber (B) and the number average molecular weight Mn in terms of styrene.

(Average number of functional groups per molecule) = [(Number average molecular weight Mn)/(Molecular weight of styrene unit) × (Average molecular weight per repeating unit of conjugated diene and, if present, other monomers other than conjugated diene)]/(Equivalent weight of functional group)

Note that the equivalent weight of the functional group of the modified liquid diene-based rubber (B) means the mass of butadiene and, if present, monomers other than butadiene bonded per functional group. The equivalent weight of the functional group can be calculated from the area ratio of the peak derived from the functional group of the modified liquid diene-based rubber (B) to the peak derived from the main chain of the modified liquid diene-based rubber (B) using $^{1}$H-NMR or $^{13}$C-NMR. Note that the peak derived from the functional group refers to a peak derived from an alkoxy group contained in a group derived from the silane compound (1) contained in the modified liquid diene-based rubber (B).

The amount of the silane compound (1) added to the modified liquid diene-based rubber (B) is preferably 1 to 60 parts by mass, more preferably 1 to 50 parts by mass, and still more preferably 1 to 40 parts by mass, with respect to 100 parts by mass of the unmodified liquid diene-based rubber (B'). When the amount added is more than 60 parts by mass, the effect of improving the resistance to flexural fatigue of the sidewall to be obtained tends to be impaired. When the amount added is less than 1 part by mass, the dispersion effect of the filler (C) tends to be insufficient, and the obtained sidewall tends not to have excellent resistance to flexural fatigue. Note that the amount of the silane compound (1) added to the modified liquid diene-based rubber (B) can be determined using, for example, various analytical instruments such as NMR.

A method for adding the silane compound (1) to the unmodified liquid diene-based rubber (B') is not particularly limited. For example, a method can be employed in which the silane compound (1) and, as necessary, a radical generator are added to the unmodified liquid diene-based rubber (B'), and the mixture is heated in the presence or absence of an organic solvent. The radical generator to be used is not particularly limited, and, for example, commercially available organic peroxides, azo-based compounds, or hydrogen peroxide can usually be used. It is not desirable to carry out the addition reaction of the silane compound (1) to the unmodified liquid diene-based rubber (B') solely by heating without using a radical generator. For example, when the heating temperature is too low, the addition reaction does not sufficiently occur, and the average number of functional groups per molecule may not fall within a desired range. In addition, when the heating temperature is high, the addition reaction may proceed; however, radicals may also be generated on the polymer main chain, which may cause molecular weight increase reaction of the polymer to occur simultaneously. As a result, the Mw of the modified liquid diene-based rubber may fall outside the desired range, and the viscosity of the modified liquid diene-based rubber may also deviate from the desired range. In such cases involving high reaction temperatures, the handleability of the modified liquid diene-based rubber may deteriorate, and adverse effects may appear in the physical properties of the resulting rubber composition for a sidewall. On the other hand, when the addition reaction is carried out by adding a radical generator and applying heat, the addition reaction proceeds sufficiently even at a relatively low heating temperature while side reactions such as polymerization reaction are sufficiently suppressed.

When the maximum peak molecular weight in terms of polystyrene of the modified liquid diene-based rubber (B) determined by GPC measurement is defined as Mt, the proportion of a modified liquid diene-based rubber (B) having a molecular weight in a range of Mt × 1.45 or more based on 100% of the total area derived from the modified liquid diene-based rubber (B) in the GPC chromatogram obtained by GPC measurement of the modified liquid diene-based rubber (B) is preferably in the range of 0 to 30%, more preferably in the range of 0 to 20%, still more preferably in the range of 0 to 18%, even more preferably in the range of 0 to 15%, particularly preferably in the range of 0 to 10%, and more particularly preferably in the range of 0 to 8%. By blending such a modified liquid diene-based rubber (B) into a rubber composition, the processability of the rubber composition is improved, and the interaction with a filler (C) described below in the obtained rubber composition is improved, such that the dispersion state of the filler (C) in the rubber composition is excellent, and it is estimated that the modified liquid diene-based rubber (B) is ideal for improving the physical properties (for example, improvement in low fuel consumption performance and improvement in resistance to flexural fatigue) of the obtained sidewall.

Examples of the organic peroxides include methyl ethyl ketone peroxide, cyclohexanone peroxide, 3,3,5-trimethylcyclohexanone peroxide, methylcyclohexanone peroxide, acetylacetone peroxide, 1,1-bis(t-butylperoxy)-3,3,5-trimethylcyclohexane, 1,1-bis(t-butylperoxy)cyclohexane, 1,1-bis(t-hexylperoxy)cyclohexane, 2,2-bis(t-butylperoxy)butane, t-butyl hydroperoxide, cumene hydroperoxide, diisopropylbenzene hydroperoxide, paramenthane hydroperoxide, 2,5-dimethylhexane 2,5-dihydroperoxide, 1,1,3,3-tetramethylbutyl hydroperoxide, di-t-butyl peroxide, t-butyl cumyl peroxide, dicumyl peroxide, bis(t-butylperoxyisopropyl)benzene, 2,5-dimethyl-2,5-di(t-butylperoxy) hexane, 2.5-hexanoyl peroxide, lauroyl peroxide, succinic acid peroxide, benzoyl peroxide and its derivatives, 2,4-dichlorobenzoyl peroxide, m-toluoyl peroxide, diisopropyl peroxydicarbonate, t-butyl-2-ethylhexanoate, di-2-ethylhexyl peroxydicarbonate, dimethoxyisopropyl peroxycarbonate, di(3-methyl-3-methoxybutyl) peroxydicarbonate, t-butyl peroxyacetate, t-butyl peroxypivalate, t-butyl peroxyneodecanoate, t-butyl peroxyoctanoate, t-butyl peroxy-3,3,5-trimethylhexanoate, t-butyl peroxylaurate, t-butyl peroxycarbonate, t-butyl peroxybenzoate, and t-butyl peroxyisobutyrate.

Examples of the azo-based compound include 2,2'-azobisisobutyronitrile, 1,1'-azobis(cyclohexane-1-carbonitrile), 2,2'-azobis(2-methylbutyronitrile), 2,2'-azobis(2,4-dimethylvaleronitrile), 2,2'-azobis(2,4-dimethyl-4-methoxyvaleronitrile), 2,2'-azobis(2-(2-imidazolin-2-yl)propane), 2,2'-azobis(2,4,4-trimethylpentane), 2,2'-azobis(2-methylpropane), 2,2'-azobis(2-hydroxymethylpropionitrile), 4,4'-azobis(4-cyanovaleric acid), dimethyl 2,2'-azobis(2-methylpropionate), 2-cyano-2-propylazohydroformamide, and 2-phenylazo-4-methoxy-2,4-dimethylvaleronitrile.

Examples of the organic solvent used in the above method generally include a hydrocarbon-based solvent and a halogenated hydrocarbon-based solvent. Among these organic solvents, hydrocarbon solvents such as n-butane, n-hexane, n-heptane, cyclohexane, benzene, toluene, and xylene are preferable.

Furthermore, in carrying out the reaction for adding the silane compound (1) by the above method, an antidegradant may be added from the viewpoint of suppressing side reactions and the like.

Examples of a preferred antidegradant used at this time include 2,6-di-t-butyl-4-methylphenol (BHT), 2,2'-methylenebis(4-methyl-6-t-butylphenol), 4,4'-thiobis(3-methyl-6-t-butylphenol), 4,4'-butylidenebis(3-methyl-6-t-butylphenol) (AO-40), 3,9-bis[1,1-dimethyl-2-[3-(3-t-butyl-4-hydroxy-5-methylphenyl)propionyloxy]ethyl]-2,4,8,10-tetraoxaspiro[5.5]undecane (AO-80), 2,4-bis[(octylthio)methyl]-6-methylphenol (Irganox 1520L), 2,4-bis[(dodecylthio)methyl]-6-methylphenol (Irganox 1726), 2-[1-(2-hydroxy-3,5-di-t-pentylphenyl)ethyl]-4,6-di-t-pentylphenyl acrylate (Sumilizer GS), 2-t-butyl-6-(3-t-butyl-2-hydroxy-5-methylbenzyl)-4-methylphenyl acrylate (Sumilizer GM), 6-t-butyl-4-[3-(2,4,8,10-tetra-t-butyldibenzo[d,f][1,3,2]dioxaphosphepin-6-yloxy)propyl]-2-methylphenol (Sumilizer GP), tris(2,4-di-t-butylphenyl)phosphite (Irgafos 168), dioctadecyl 3,3'-dithiobispropionate, hydroquinone, p-methoxyphenol, N-phenyl-N'-(1,3-dimethylbutyl)-p-phenylenediamine (Nocrac 6C), bis(2,2,6,6-tetramethyl-4-piperidyl) sebacate (LA-77Y), N,N-dioctadecylhydroxylamine (Irgastab FS042), and bis(4-t-octylphenyl)amine (Irganox 5057). The antidegradants may be used alone or in combination with two or more types thereof.

The amount of the antidegradant used is preferably 0 to 10 parts by mass and more preferably 0 to 5 parts by mass with respect to 100 parts by mass of the unmodified liquid diene-based rubber (B').

In the modified liquid diene-based rubber (B), a position at which the functional group is introduced may be a polymerization chain end or a side chain of a polymerization chain. It is preferable that the functional group is present on a side chain of a polymerization chain from the viewpoint of facilitating the introduction of a plurality of functional groups. In addition, the above functional groups may be contained as a single type or as two or more types. Therefore, the modified liquid diene-based rubber (B) may be modified with one type of the silane compound (1), or may be modified with two or more types of the silane compound (1).

The mixing ratio of the unmodified liquid diene-based rubber (B') to the silane compound (1) may be appropriately set, for example, so that the average number of functional groups per molecule of the modified liquid diene-based rubber (B) be a desired value. For example, the unmodified liquid diene-based rubber (B') and the silane compound (1) may be mixed at a mass ratio (B')/(1) of 0.3 to 300.

As a method for producing the modified liquid diene-based rubber (B) having specific properties, it is effective to carry out a radical addition reaction of the silane compound (1) at an appropriate reaction temperature for a sufficient reaction time. For example, the temperature in the reaction of adding the silane compound (1) to the unmodified liquid diene-based rubber (B') is preferably 10°C to 200°C, more preferably 50°C to 180°C, and still more preferably 50°C to 140°C. The reaction time is preferably 1 to 200 hours, more preferably 1 to 100 hours, still more preferably 1 to 50 hours, and even still more preferably 1 to 25 hours.

The modified liquid diene-based rubber (B) has a weight average molecular weight (Mw) of 3,000 or more and 120,000 or less (requirement (i)). In the present invention, the Mw of the modified liquid diene-based rubber (B) is the weight average molecular weight in terms of polystyrene determined from measurement by the gel permeation chromatography (GPC). When the Mw of the modified liquid diene-based rubber (B) is within the above range, the processability during production is excellent, and economic efficiency is favorable. In addition, the processability of the rubber composition of the present invention is improved, the dispersibility of the filler (C) is excellent, and the physical properties of the obtained sidewall can be improved (for example, improvement in low fuel consumption performance and improvement in resistance to flexural fatigue).

From the viewpoint of improving the low fuel consumption performance and the resistance to flexural fatigue of the obtained sidewall, the Mw of the modified liquid diene-based rubber (B) is preferably 4,000 or more and 80,000 or less, more preferably 4,500 or more and 60,000 or less, still more preferably 5,000 or more and 40,000 or less, even more preferably 5,500 or more and 35,000 or less, even more preferably 5,500 or more and 12,000 or less, and particularly preferably 5,500 or more and 9,000 or less. The Mw of the modified liquid diene-based rubber (B) is determined as the molecular weight in terms of standard polystyrene by gel permeation chromatography (GPC). Specifically, it can be determined by the method described in Examples.

The molecular weight distribution (Mw/Mn) of the modified liquid diene-based rubber (B) is preferably 1.0 to 20.0, more preferably 1.0 to 15.0, still more preferably 1.0 to 10.0, even more preferably 1.0 to 5.0, and particularly preferably 1.0 to 2.0. When the Mw/Mn is within the above range, the variation in viscosity of the obtained modified liquid diene-based rubber (B) is small, which is more preferable. Note that the molecular weight distribution (Mw/Mn) means a ratio of a weight

average molecular weight (Mw)/a number average molecular weight (Mn) in terms of standard polystyrene determined by the measurement by GPC.

The vinyl content of the modified liquid diene-based rubber (B) is 70 mol% or less (requirement (ii)). When the vinyl content exceeds 70 mol%, low fuel consumption performance tends to deteriorate.

From the viewpoint of low fuel consumption performance, the vinyl content of the modified liquid diene-based rubber (B) is preferably 65 mol% or less, more preferably 60 mol% or less, still more preferably 50 mol% or less, even more preferably 45 mol% or less, particularly preferably 40 mol% or less, and more particularly preferably 30 mol% or less. The vinyl content of the modified liquid diene-based rubber (B) is preferably 3 mol% or more, more preferably 5 mol% or more, still more preferably 7 mol% or more, and even more preferably 10 mol% or more. A preferred numerical range of the vinyl content of the modified liquid diene-based rubber (B) can be set by appropriately combining the above upper limit and lower limit.

In the present invention, the "vinyl content" in the modified liquid diene-based rubber (B) means the total mol% of conjugated diene units bonded through 1,2-bonding, 3,4-bonding (case other than farnesene), and 3,13-bonding (case of farnesene) (conjugated diene units bonded through bonding other than 1,4-bonding (that is, case other than farnesene) and 1,13-bonding (case of farnesene)) with respect to 100 mol% of the total of the conjugated diene units contained in the modified liquid diene-based rubber (B). The vinyl content can be calculated from an area ratio of peaks derived from conjugated diene units bonded through 1,2-bonding or 3,4-bonding (case other than farnesene), and 3,13-bonding (case of farnesene) to peaks derived from conjugated diene units bonded through 1,4-bonding (case other than farnesene) and 1,13-bonding (case of farnesene) by analyzing the modified liquid diene-based rubber (B) using $^1$H-NMR.

Note that the vinyl content of the modified liquid diene-based rubber (B) can be adjusted to a desired value by controlling, for example, the type of the solvent used in the production of the unmodified liquid diene-based rubber (B'), the polar compound to be used as necessary, or the polymerization temperature.

The melt viscosity of the modified liquid diene-based rubber (B) measured at 38°C is preferably 0.1 to 4,000 Pa·s, more preferably 0.1 to 2,000 Pa·s, still more preferably 0.1 to 1,000 Pa·s, even more preferably 0.1 to 500 Pa·s, and particularly preferably 0.1 to 200 Pa·s. When the melt viscosity of the modified liquid diene-based rubber (B) is within the above range, the flexibility of the obtained rubber composition is improved, thereby improving the processability. Note that, in the present invention, the melt viscosity of the modified liquid diene-based rubber (B) is a value measured by a Brookfield-type viscometer at 38°C.

The glass transition temperature (Tg) of the modified liquid diene-based rubber (B) may vary depending on, for example, the vinyl content of the conjugated diene units, the type of the conjugated diene, and the content of units derived from monomers other than the conjugated diene, and is preferably -150 to 50°C, more preferably -130 to 50°C, still more preferably -130 to 30°C, and even more preferably -100 to 0°C. When the Tg is within the above range, for example, the resistance to flexural fatigue of the sidewall obtained from the rubber composition is improved. In addition, an increase in viscosity can be suppressed, and handling becomes easier.

The modified liquid diene-based rubber (B) may be used alone or in combination with two or more types thereof.

In the modified liquid diene-based rubber (B), the amount of a catalyst residue derived from the polymerization catalyst used for production thereof is preferably in the range of 0 to 200 ppm in terms of metal. For example, when an organoalkali metal such as an organolithium compound is used as a polymerization catalyst for producing the unmodified liquid diene-based rubber (B') serving as a raw material for the modified liquid diene-based rubber (B), a metal serving as a basis for the amount of the catalyst residue is an alkali metal such as lithium. When the amount of the catalyst residue is within the above range, the tack does not decrease during, for example, processing, and the heat resistance of a crosslinked product obtained from the rubber composition of the present invention and the rolling resistance performance of the tire is improved. The amount of the catalyst residue derived from the polymerization catalyst used for producing the modified liquid diene-based rubber (B) is more preferably 0 to 150 ppm and still more preferably 0 to 100 ppm in terms of metal. Note that the amount of the catalyst residue can be measured using, for example, a polarized Zeeman atomic absorption spectrophotometer.

Methods for obtaining the amount of the catalyst residue of the liquid diene-based rubber in such a specific amount include, for example, a method of purifying the modified liquid diene-based rubber (B) or the unmodified liquid diene-based rubber (B') serving as a raw material and sufficiently removing the catalyst residue. As the purification method, washing with water or warm water, or an organic solvent represented by, for example, methanol or acetone, or supercritical fluid carbon dioxide is preferable. The number of times of washing is preferably 1 to 20 times and more preferably 1 to 10 times from an economical viewpoint. In addition, the washing temperature is preferably 20 to 100°C, and more preferably 40 to 90°C. In addition, by removing impurities that inhibit polymerization by distillation or with an adsorbent before the polymerization reaction and thereby increasing the purity of the monomer or the solvent, the amount of the polymerization catalyst required can be reduced, and thus the amount of the catalyst residue can be reduced. In addition, from a viewpoint similar to the above, the amount of the catalyst residue in the rubber composition for a sidewall of the present invention containing the solid rubber (A), the modified liquid diene-based rubber (B), and the filler (C) is preferably 0 to 200 ppm, more preferably 0 to 150 ppm, and still more preferably 0 to 100 ppm in terms of metal. In this case,

the catalyst residue may be the catalyst residue derived from the polymerization catalyst used for production of any one or more of the solid rubber (A), the modified liquid diene-based rubber (B), and other optional components contained in the rubber composition for a sidewall of the present invention.

In the rubber composition of the present invention, the content of the modified liquid diene-based rubber (B) with respect to 100 parts by mass of the solid rubber (A) is 0.1 to 30 parts by mass, preferably 0.5 to 25 parts by mass, more preferably 1 to 25 parts by mass, still more preferably 2 to 25 parts by mass, even more preferably 5 to 20 parts by mass, even more preferably 5 to 15 parts by mass. When the content of the modified liquid diene-based rubber (B) is within the above range, the dispersibility of the filler (C) in the rubber composition is improved, and the obtained sidewall has excellent resistance to flexural fatigue and improved low fuel consumption performance.

[Filler (C)]

The filler (C) used in the rubber composition for a sidewall of the present invention is not particularly limited as long as it is generally used in the rubber composition for a sidewall, but from the viewpoint of improving the low fuel consumption performance of the sidewall, the filler (C) contains silica (C1).

Examples of the silica (C1) include wet silica (hydrous silicic acid), dry silica (anhydrous silicic acid), calcium silicate, and aluminum silicate. Among these silicas, wet silica is preferable from the viewpoint of further improving the processability and the low fuel consumption performance of the obtained sidewall.

From the viewpoint of resistance to flexural fatigue of a sidewall, the BET specific surface area of the silica (C1) is less than 170 ($m^2/g$). The BET specific surface area of the silica (C1) is preferably less than 130 ($m^2/g$), and more preferably less than 110 ($m^2/g$). Note that the BET specific surface area of the silica (C1) is preferably 50 ($m^2/g$) or more, more preferably 80 ($m^2/g$) or more, and still more preferably 90 ($m^2/g$) or more. The BET specific surface area is a value obtained by a BET method in accordance with ASTM D3037-81.

The average particle diameter of the silica (C1) is preferably 10 nm or more, more preferably 15 nm or more, still more preferably 20 nm or more, and even more preferably 25 nm or more, from the viewpoint of improving the processability of the rubber composition for a sidewall and the low fuel consumption performance of the sidewall. The average particle diameter is preferably 100 nm or less, more preferably 80 nm or less, still more preferably 60 nm or less, and even more preferably 40 nm or less. Note that the average particle diameter of silica can be determined by measuring the diameters of the particles in a field of view observed with a transmission electron microscope and calculating the average value thereof.

These silicas (C1) may be used alone or in combination with two or more types thereof.

As the filler (C) used in the rubber composition for a sidewall of the present invention, the filler (C) preferably contains carbon black (C2) from the viewpoint of improving the physical properties such as improving the mechanical strength and weather resistance of the sidewall. That is, the filler (C) used in the rubber composition for a sidewall of the present invention preferably contains silica (C1) and carbon black (C2).

Examples of the carbon black (C2) include furnace black, channel black, thermal black, acetylene black, and Ketjen black. From the viewpoint of improving the crosslinking rate and improving mechanical strength of the obtained sidewall, among these carbon blacks, furnace black is preferable.

The average particle diameter of the carbon black (C2) is preferably 5 nm or more, more preferably 10 nm or more, and still more preferably 15 nm or more, from the viewpoint of improving the mechanical strength and low fuel consumption performance of the sidewall formed at least in part from the rubber composition for a sidewall. The average particle diameter is preferably 100 nm or less, more preferably 80 nm or less, still more preferably 70 nm or less, and even more preferably 60 nm or less. Note that the average particle diameter of the carbon black can be determined by measuring the diameters of the particles in a field of view observed with a transmission electron microscope and calculating the average value thereof.

Examples of a commercially available product of the furnace black include "DIABLACK" manufactured by Mitsubishi Chemical Corporation, and "SEAST" manufactured by Tokai Carbon Co., Ltd. Examples of a commercially available product of the acetylene black include "DENKA BLACK" manufactured by Denki Kagaku Kogyo K.K. Examples of a commercially available product of the Ketjen black include "ECP600JD" manufactured by Lion Corporation.

From the viewpoint of improving, for example, the wettability and dispersibility in the solid rubber (A), the carbon black (C2) may be subjected to an acid treatment with, for example, nitric acid, sulfuric acid, hydrochloric acid, or a mixed acid thereof, or a surface oxidation treatment by a heat treatment in the presence of air. In addition, from the viewpoint of improving the mechanical strength of the rubber composition for a sidewall of the present invention and the sidewall obtained from the composition, a heat treatment may be performed at 2,000 to 3,000°C in the presence of a graphitization catalyst. Note that, as the graphitization catalyst, boron, a boron oxide (for example, $B_2O_2$, $B_2O_3$, $B_4O_3$, or $B_4O_5$), a boron oxoacid (for example, orthoboric acid, metaboric acid, or tetraboric acid) and a salt thereof, a boron carbide (for example, $B_4C$ or $B_6C$), boron nitride (BN), or another boron compound is suitably used.

The carbon black (C2) can also be used after the particle size is adjusted by, for example, pulverization. In the

pulverization of the carbon black, for example, a highspeed rotary pulverizer (a hammer mill, a pin mill, or a cage mill), various ball mills (a rolling mill, a vibration mill, or a planetary mill), a stirring mill (a bead mill, an attritor, a flow tube type mill, or an annular mill) can be used.

These carbon blacks (C2) may be used alone or in combination with two or more types thereof.

In the present invention, the rubber composition for a sidewall may contain a filler (C) other than silica (C1) and carbon black (C2), for example, for the purpose of improving the characteristics such as improving the mechanical strength of the obtained sidewall, and reducing the production cost by blending the filler as an extender.

Examples of the filler other than the silica (C1) and the carbon black (C2) include organic fillers, and inorganic fillers such as clay, talc, mica, calcium carbonate, magnesium hydroxide, aluminum hydroxide, barium sulfate, titanium oxide, glass fibers, fibrous fillers, and hollow glass microspheres. These fillers may be used alone or in combination with two or more types thereof.

The amount of the filler (C) with respect to 100 parts by mass of the solid rubber (A) is 5 to 80 parts by mass, and preferably 20 to 60 parts by mass. When the amount of the filler (C) is within the above range, the resistance to flexural fatigue and the low fuel consumption performance of the sidewall obtained from the rubber composition for a sidewall of the present invention are improved.

In addition, when the silica (C1) is used as the filler (C), the amount of the silica (C1) with respect to 100 parts by mass of the solid rubber (A) is preferably 10 parts by mass or more, more preferably 15 parts by mass or more, still more preferably 20 parts by mass or more, even more preferably 25 parts by mass or more, and particularly preferably 30 parts by mass or more, from the viewpoint of improving the low fuel consumption performance of the sidewall obtained from the rubber composition for a sidewall. The amount of the silica (C1) is preferably 60 parts by mass or less, more preferably 50 parts by mass or less, and still more preferably 40 parts by mass or less. From the above, the amount of the silica (C1) with respect to 100 parts by mass of the solid rubber (A) is preferably 10 parts by mass or more and 60 parts by mass or less, more preferably 15 parts by mass or more and 50 parts by mass or less, still more preferably 20 parts by mass or more and 40 parts by mass or less, and even more preferably 25 parts by mass or more and 40 parts by mass or less.

Furthermore, when the carbon black (C2) is used as the filler (C), the amount of the carbon black (C2) with respect to 100 parts by mass of the solid rubber (A) is preferably 1 part by mass or more, more preferably 1.5 parts by mass or more, and still more preferably 2 parts by mass or more, from the viewpoint of improving the mechanical strength and weather resistance of the sidewall obtained from the rubber composition for a sidewall of the present invention. The amount of the carbon black (C2) is preferably 20 parts by mass or less, more preferably 15 parts by mass or less, and still more preferably 10 parts by mass or less.

When silica (C1) and carbon black (C2) are used in combination as the filler (C), the ratio of the silica (C1) to the carbon black (C2) (mass ratio = (C1)/(C2)) is preferably 1/99 to 99/1, more preferably 10/90 to 97/3, still more preferably 30/70 to 95/5, even more preferably 50/50 to 95/5, and particularly preferably 70/30 to 95/5, from the viewpoint of further improving the resistance to flexural fatigue of a sidewall obtained from the rubber composition for a sidewall of the present invention and further improving the low fuel consumption performance.

[Other components]

The rubber composition for a sidewall of the present invention preferably contains a silane coupling agent because silica (C1) is contained as the filler (C). Examples of the silane coupling agent include a sulfide-based compound, a mercapto-based compound, a vinyl-based compound, an amino-based compound, a glycidoxy-based compound, a nitro-based compound, and a chloro-based compound.

Examples of the sulfide-based compound include bis(3-triethoxysilylpropyl)tetrasulfide, bis(2-triethoxysilylethyl) tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-trimethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide, and 3-octanoylthio-1-propyltriethoxysilane.

Examples of the mercapto-based compound include 3-mercaptopropyltrimethoxysilane, 3-mercaptopropyltriethoxysilane, 2-mercaptoethyltrimethoxysilane, and 2-mercaptoethyltriethoxysilane.

Examples of the vinyl-based compound include vinyltriethoxysilane and vinyltrimethoxysilane.

Examples of the amino-based compound include 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane.

Examples of the glycidoxy-based compound include γ-glycidoxypropyltriethoxysilane, γ-glycidoxypropyltrimethoxysilane, γ-glycidoxypropylmethyldiethoxysilane, and γ-glycidoxypropylmethyldimethoxysilane.

Examples of the nitro-based compound include 3-nitropropyltrimethoxysilane and 3-nitropropyltriethoxysilane.

Examples of the chloro-based compound include 3-chloropropyltrimethoxysilane, 3-chloropropyltriethoxysilane, 2-chloroethyltrimethoxysilane, and 2-chloroethyltriethoxysilane.

Examples of other compounds include octyltriethoxysilane, methyltriethoxysilane, methyltrimethoxysilane, and hexadecyltrimethoxysilane.

These silane coupling agents may be used alone or in combination with two or more types thereof. Among these silane coupling agents, sulfur-containing silane coupling agents such as sulfide-based compounds and mercapto-based compounds are preferable, and bis(3-triethoxysilylpropyl)disulfide, bis(3-triethoxysilylpropyl)tetrasulfide, and 3-mercaptopropyltriethoxysilane are more preferable from the viewpoint of a high reinforcing effect.

The silane coupling agent is contained in an amount of preferably 0.1 to 30 parts by mass, more preferably 0.5 to 20 parts by mass, and still more preferably 1 to 15 parts by mass with respect to 100 parts by mass of the silica (C1). When the content of the silane coupling agent is within the above range, the dispersibility of the filler, coupling effect, reinforcing property, and resistance to flexural fatigue are improved.

The rubber composition for a sidewall of the present invention may further contain a vulcanizing agent (D) in order to crosslink the rubber. Examples of the vulcanizing agent (D) include sulfur and sulfur compounds. Examples of the sulfur compound include morpholine disulfide and alkylphenol disulfide. These vulcanizing agents (D) may be used alone or in combination with two or more types thereof. From the viewpoint of mechanical properties of the obtained crosslinked product, the vulcanizing agent (D) is usually contained in an amount of 0.1 to 10 parts by mass, preferably 0.5 to 10 parts by mass, and more preferably 0.8 to 5 parts by mass with respect to 100 parts by mass of the solid rubber (A).

When the rubber composition for a sidewall of the present invention contains, for example, a vulcanizing agent (D) for crosslinking (vulcanizing) rubber, the rubber composition may further contain a vulcanization accelerator (E). Examples of the vulcanization accelerator (E) include a guanidine-based compound, a sulfenamide-based compound, a thiazole-based compound, a thiuram-based compound, a thiourea-based compound, a dithiocarbamic acid-based compound, an aldehyde-amine-based compound, an aldehyde-ammonia-based compound, an imidazoline-based compound, and a xanthate-based compound. These vulcanization accelerators (E) may be used alone or in combination with two or more types thereof. The vulcanization accelerator (E) is usually contained in an amount of 0.1 to 15 parts by mass and preferably 0.1 to 10 parts by mass with respect to 100 parts by mass of the solid rubber (A).

When the rubber composition for a sidewall of the present invention contains, for example, sulfur or a sulfur compound as the vulcanizing agent (D) for crosslinking (vulcanizing) the rubber, the rubber composition may further contain a vulcanization aid (F). Examples of the vulcanization aid (F) include fatty acids such as stearic acid, metal oxides such as zinc oxide, and fatty acid metal salts such as zinc stearate. These vulcanization aids (F) may be used alone or in combination with two or more types thereof. The vulcanization aid (F) is usually contained in an amount of 0.1 to 15 parts by mass and preferably 1 to 10 parts by mass with respect to 100 parts by mass of the solid rubber (A).

The rubber composition for a sidewall may contain a crosslinking agent in addition to the vulcanizing agent (D). Examples of the crosslinking agent include oxygen, an organic peroxide, a phenolic resin, an amino resin, quinone and quinone dioxime derivatives, a halogen compound, an aldehyde compound, an alcohol compound, an epoxy compound, a metal halide, an organometallic halide, and a silane compound. These crosslinking agents may be used alone or in combination with two or more types thereof. The amount of the crosslinking agent is preferably 0.1 to 10 parts by mass with respect to 100 parts by mass of the solid rubber (A).

The rubber composition for a sidewall of the present invention may contain, as a softening agent, process oils such as silicone oil, aromatic oil, TDAE (Treated Distilled Aromatic Extract), MES (Mild Extracted Solvate), RAE (Residual Aromatic Extract), paraffin oil, and naphthenic oil, resin components such as an aliphatic hydrocarbon resin, an alicyclic hydrocarbon resin, a C9-based resin, a rosin-based resin, a coumarone-indene-based resin, or a phenolic resin, and liquid polymers such as low-molecular-weight polybutadiene, low-molecular-weight polyisoprene, a low-molecular-weight styrene-butadiene copolymer, and a low-molecular-weight styrene-isoprene copolymer, as necessary, for the purpose of improving, for example, processability and fluidity to the extent that the effect of the present invention is not impaired. When the rubber composition for a sidewall of the present invention contains the process oil, the resin, and the liquid polymer as a softening agent, the content thereof is preferably 50 parts by mass or less, more preferably 30 parts by mass or less, and still more preferably 15 parts by mass or less, with respect to 100 parts by mass of the solid rubber (A) from the viewpoint of bleed resistance.

The rubber composition for a sidewall of the present invention may contain an additive such as an antidegradant, an antioxidant, a wax, a lubricant, a light stabilizer, a scorch inhibitor, a processing aid, a colorant such as a pigment or a dye, a flame retardant, an antistatic agent, a matting agent, an antiblocking agent, an ultraviolet absorber, a mold release agent, a foaming agent, an antibacterial agent, an antifungal agent, or a fragrance as necessary for the purpose of improving, for example, weather resistance, heat resistance, or oxidation resistance to the extent that the effect of the present invention is not impaired.

Examples of the antioxidant include a hindered phenolic compound, a phosphorus-based compound, a lactone-based compound, and a hydroxyl-based compound.

Examples of the antidegradant include an amine-ketone-based compound, an imidazole-based compound, an amine-based compound, a phenolic compound, a sulfur-based compound, and a phosphorus-based compound. These

additives may be used alone or in combination with two or more types thereof.

[Method for producing rubber composition for sidewall]

A method for producing the rubber composition for a sidewall of the present invention is not particularly limited as long as the above components can be uniformly mixed. Examples of an apparatus used for producing the rubber composition for a sidewall include tangential or intermeshing closed-type kneaders such as a kneader-extruder, a Brabender, a Banbury mixer, and an internal mixer, a single-screw extruder, a twin-screw extruder, a mixing roll, and a roller. The rubber composition can be produced usually in a temperature range of 70 to 270°C.

The rubber composition for a sidewall of the present invention is preferably used as a crosslinked product (vulcanized rubber) by being crosslinked. The conditions and method of vulcanization are not particularly limited, but it is preferable to perform vulcanization using a vulcanization mold under the conditions of a vulcanization temperature of 120 to 200°C and a vulcanization pressure of 0.5 to 20 MPa.

The extraction rate of the modified liquid diene-based rubber (B) from the crosslinked product is preferably 20 mass% or less, more preferably 15 mass% or less, and still more preferably 10 mass% or less.

Note that the extraction rate can be calculated from the amount of the modified liquid diene-based rubber (B) extracted into toluene after 2 g of the crosslinked product is immersed in 400 mL of toluene at 23°C for 48 hours.

[Sidewall]

The sidewall of the present invention is formed at least in part from the rubber composition for a sidewall, and has excellent resistance to flexural fatigue and improved low fuel consumption performance. In addition, since the rubber composition for a sidewall has excellent resistance to flexural fatigue, the sidewall can be thinned (weight reduction of the sidewall), and a tire having excellent low fuel consumption performance can be obtained by reducing the weight of the tire.

The sidewall of the present invention can be obtained as a tire containing the sidewall of the present invention by molding a sidewall rubber having a predetermined cross-sectional shape from the rubber composition for a sidewall obtained as described above using, for example, an extruder, and producing various tires (pneumatic tires) such as a passenger car tire, a large tire for a truck or a bus, and a two-wheeled vehicle tire by a normal method (generally including a crosslinking step) using the sidewall rubber.

The structure of the sidewall of the present invention is not particularly limited, and may be a single layer structure or a multilayer structure, but when the sidewall has a multilayer structure, it is preferable to apply the rubber composition for a sidewall to the outermost layer.

## Examples

Hereinafter, the present invention will be described in more detail with reference to examples, but the present invention is not limited to these examples.

The respective components used in the present examples and comparative examples are as follows.

<Solid rubber (A)>

Natural rubber: STR20 (Thai natural rubber)
Butadiene rubber: BR01 (Mw: 550,000, cis content: 95 mass%, manufactured by ENEOS Materials Corporation)

<Modified liquid diene-based rubber (B)>

Modified liquid diene-based rubbers obtained in Production Examples 1-2 to 4-2 described below
In comparative examples, unmodified liquid diene-based rubbers obtained in Production Examples 1-1 to 4-1

<Filler (C)>

Silica 1: NipsilER-R (wet silica, BET specific surface area: 92 $m^2/g$, manufactured by Tosoh Silica Corporation)
Note that the BET specific surface area is a value obtained by the BET method in accordance with ASTM D3037-81.
Carbon black: DIABLACK H (average particle diameter: 31 nm, specific surface area: 79 $m^2/g$, manufactured by

Mitsubishi Chemical Corporation)

The specific surface area of the carbon black is a value obtained in accordance with JIS K 6217-2:2001.

<Vulcanizing agent (D)>

Sulfur: MUCRON OT-20 (insoluble sulfur, oil content: 18 to 22%, manufactured by Shikoku Chemicals Corporation)

<Vulcanization accelerator (E)>

Vulcanization accelerator (1): Sanceler NS-G (manufactured by SANSHIN CHEMICAL INDUSTRY CO., LTD.)
Vulcanization accelerator (2): Nocceler CZ-G (manufactured by Ouchi Shinko Chemical Industrial Co., Ltd.)
Vulcanization accelerator (3): Nocceler D (manufactured by Ouchi Shinko Chemical Industrial Co., Ltd.)

<Vulcanization aid (F)>

Stearic acid: Lunac S-20 (manufactured by Kao Corporation)
Zinc oxide: zinc oxide (manufactured by Sakai Chemical Industry Co., Ltd.)

<Optional components>

TDAE: VivaTec 500 (manufactured by H&R)
Silane coupling agent: Si-69 (manufactured by Evonik Degussa Japan Co., Ltd.)
Antidegradant: Nocrac 6C (manufactured by Ouchi Shinko Chemical Industrial Co., Ltd.)

Production Example 1-1: Production of unmodified liquid diene-based rubber (B'-1)

A sufficiently dried 5 L autoclave was purged with nitrogen, 1,280 g of cyclohexane and 66 g of sec-butyllithium (10.5 mass% cyclohexane solution) were charged, the temperature was raised to 50°C, and then, under stirring conditions, while controlling the polymerization temperature at 50°C, 1,350 g of butadiene was sequentially added, to carry out polymerization for 1 hour. Methanol was then added to terminate the polymerization reaction, thereby obtaining a polymer solution. Water was added to the obtained polymer solution and stirred to wash the polymer solution with water. After completion of stirring and confirmation of phase separation between the polymer solution phase and the aqueous phase, the aqueous phase was separated. The washed polymer solution was vacuum dried at 70°C for 24 hours to obtain an unmodified liquid diene-based rubber (B'-1).

Production Example 1-2: Production of modified liquid diene-based rubber (B-1)

700 g of the unmodified liquid diene-based rubber (B'-1) obtained in Production Example 1-1 was charged into an autoclave having a volume of 1 L, and degassed with nitrogen while being stirred at 60°C for 3 hours. 1.0 g of 1,1-bis(t-hexylperoxy)cyclohexane and 50 g of (3-mercaptopropyl)triethoxysilane were then added, and the mixture was reacted at 105°C for 8 hours to obtain a modified liquid diene-based rubber (B-1).

Production Example 2-1: Production of unmodified liquid diene-based rubber (B'-2)

A sufficiently dried 5 L autoclave was purged with nitrogen, 1,150 g of hexane and 154 g of n-butyllithium (17 mass% hexane solution) were charged, the temperature was raised to 50°C, and then, under stirring conditions, 10 g of N,N,N',N'-tetramethylethylenediamine was added, and then 1,250 g of butadiene was sequentially added while controlling the polymerization temperature at 50°C to carry out polymerization for 1 hour. Methanol was then added to terminate the polymerization reaction, thereby obtaining a polymer solution. Water was added to the obtained polymer solution, which was stirred and washed with water. After completion of stirring and confirmation of phase separation between the polymer

solution phase and the aqueous phase, the aqueous phase was removed. The washed polymer solution was vacuum dried at 70°C for 24 hours to obtain an unmodified liquid diene-based rubber (B'-2).

Production Example 2-2: Production of modified liquid diene-based rubber (B-2)

700 g of the unmodified liquid diene-based rubber (B'-2) obtained in Production Example 2-1 was charged into an autoclave having a volume of 1 L, and degassed with nitrogen while being stirred at 60°C for 3 hours. 0.1 g of 1,1-bis(t-butylperoxy)cyclohexane and 119 g of (3-mercaptopropyl)triethoxysilane were then added, and the mixture was reacted at 120°C for 3 hours to obtain a modified liquid diene-based rubber (B-2).

Production Example 3-1: Production of unmodified liquid diene-based rubber (B'-3)

A sufficiently dried 5 L autoclave was purged with nitrogen, and charged with 1,580 g of cyclohexane and 336 g of s-butyllithium (0.99 mol/L, cyclohexane solution), the temperature was raised to 50°C, and then, under stirring conditions, 23.4 g of tetrahydrofuran was added, and then 218 g of butadiene, 776 g of isoprene, and 234 g of butadiene were sequentially added while controlling the polymerization temperature at 50°C to carry out polymerization. Methanol was then added to terminate the polymerization reaction, thereby obtaining a polymer solution. Water was added to the obtained polymer solution and stirred to wash the polymer solution with water. After completion of stirring and confirmation of phase separation between the polymer solution phase and the aqueous phase, the aqueous phase was removed. The washed polymer solution was dried at 140°C for 3 hours to obtain an unmodified liquid diene-based rubber (B'-3) as a triblock copolymer composed of a linear butadiene homopolymer block-isoprene homopolymer block-butadiene homopolymer block.

Production Example 3-2: Production of modified liquid diene-based rubber (B-3)

481 g of the unmodified liquid diene-based rubber (B'-3) obtained in Production Example 3-1 was charged into an autoclave having a volume of 1 L, and degassed with nitrogen while being stirred at 60°C for 3 hours. 4.9 g of 1,1-bis(t-hexylperoxy)cyclohexane and 79 g of (3-mercaptopropyl)triethoxysilane were then added, and the mixture was reacted at 105°C for 8 hours to obtain a modified liquid diene-based rubber (B-3), which is a triblock copolymer that is composed of a linear butadiene homopolymer block-isoprene homopolymer block-butadiene homopolymer block and is modified with a functional group derived from the silane compound (1).

Production Example 4-1: Production of unmodified liquid diene-based rubber (B'-4)

A sufficiently dried 5 L autoclave was purged with nitrogen, 1,100 g of hexane and 204 g of n-butyllithium (17 mass% hexane solution) were charged, the temperature was raised to 50°C, and then, under stirring conditions, while controlling the polymerization temperature at 50°C, 1,300 g of butadiene was sequentially added to carry out polymerization for 1 hour. Methanol was then added to terminate the polymerization reaction, thereby obtaining a polymer solution. Water was added to the obtained polymer solution and stirred to wash the polymer solution with water. After completion of stirring and confirmation of phase separation between the polymer solution phase and the aqueous phase, the aqueous phase was removed. The washed polymer solution was vacuum dried at 70°C for 24 hours to obtain an unmodified liquid diene-based rubber (B'-4).

Production Example 4-2: Production of modified liquid diene-based rubber (B-4)

700 g of the obtained unmodified liquid diene-based rubber (B'-4) was charged into an autoclave having a volume of 1 L, and degassed with nitrogen while being stirred at 60°C for 3 hours. 2.0 g of 1,1-bis(t-butylperoxy)cyclohexane and 119 g of (3-mercaptopropyl)triethoxysilane were then added, and the mixture was reacted at 120°C for 3 hours to obtain a modified liquid diene-based rubber (B-4).

Note that the methods for measuring and calculating the physical properties of the modified liquid diene-based rubber obtained in the production examples are as follows.

(Method for measuring weight average molecular weight)

The Mw of the modified liquid diene-based rubber (B) was determined as the molecular weight in terms of standard polystyrene by gel permeation chromatography (GPC). A measurement apparatus and conditions are as follows.

· Apparatus: GPC system "GPC8020" manufactured by Tosoh Corporation

· Separation column: "TSKgel G4000HXL" manufactured by Tosoh Corporation
· Detector: "RI-8020" manufactured by Tosoh Corporation
· Eluent: tetrahydrofuran
· Eluent flow rate: 1.0 mL/min
· Sample concentration: 5 mg/10 mL
· Column temperature: 40°C

(Vinyl content)

The vinyl content of the modified liquid diene-based rubber (B) was measured using AVANCEIII 400 NanoBay manufactured by Bruker Japan K.K. as an NMR apparatus at a concentration of sample/deuterated chloroform = 50 mg/1 mL and an integration number of 1,024 times. The vinyl content was calculated from the area ratio of the peaks derived from the conjugated diene units bonded through 1,2-bonding and 3,4-bonding and the peaks derived from the conjugated diene units bonded through 1,4-bonding in the obtained spectrum.

(Glass transition temperature)

10 mg of the modified liquid diene-based rubber (B) was placed in an aluminum pan, and a thermogram was recorded by differential scanning calorimetry (DSC) at a heating rate of 10 °C/min. The value of the peak top of DDSC (first derivative of DSC curve) was taken as the glass transition temperature (Tg).

(Method for measuring melt viscosity at 38°C)

The melt viscosity at 38°C of the modified liquid diene-based rubber (B) was measured with a Brookfield viscometer (manufactured by BROOKFIELD ENGINEERING LABS. INC.).

(Average number of functional groups per molecule of modified liquid diene-based rubber (B))

The average number of functional groups per molecule of the modified liquid diene-based rubber (B) was determined by the following formula, using the equivalent weight (g/eq) of the functional groups of the modified liquid diene-based rubber (B) and the number average molecular weight Mn in terms of styrene.

(Average number of functional groups per molecule) = [(Number average molecular weight Mn)/(Molecular weight of styrene unit) × (Average molecular weight per repeating unit of conjugated diene and, if present, other monomers other than conjugated diene)]/(Equivalent weight of functional group)

Note that the equivalent weight of the functional group of the modified liquid diene-based rubber (B) means the mass of butadiene and, if present, monomers other than butadiene bonded per functional group. The equivalent weight of the functional group was calculated from the area ratio of the peak derived from the functional group and the peak derived from the main chain of the modified liquid diene-based rubber (B) obtained using $^{1}H$-NMR or $^{13}C$-NMR. Note that a peak derived from an alkoxy group was used as the peak derived from the functional group.

The physical properties of the unmodified liquid diene-based rubbers and the modified liquid diene-based rubbers obtained in Production Examples 1-1 to 4-2 are summarized in Table 1 below.

[Table 1]

| | Type of liquid diene-based rubber | Weight average molecular weight ($\times 10^3$) | Butadiene content (wt%) | Vinyl content (mol%) | Tg (°C) | Melt viscosity (38°C) (Pa·s) | Average number of functional groups per molecule (number) |
|---|---|---|---|---|---|---|---|
| Production Example 1-2 | Modified liquid diene-based rubber (B-1) | 30 | 100 | 10 | -88 | 90 | 4 |
| Production Example 2-2 | Modified liquid diene-based rubber (B-2) | 6 | 100 | 65 | -46 | 6 | 2 |

(continued)

| | Type of liquid diene-based rubber | Weight average molecular weight ($\times 10^3$) | Butadiene content (wt%) | Vinyl content (mol%) | Tg (°C) | Melt viscosity (38°C) (Pa·s) | Average number of functional groups per molecule (number) |
|---|---|---|---|---|---|---|---|
| Production Example 3-2 | Modified liquid diene-based rubber (B-3) | 6 | 37 | 44 | -48 | 5 | 2 |
| Production Example 4-2 | Modified liquid diene-based rubber (B-4) | 7 | 100 | 27 | -84 | 1 | 2 |
| Production Example 1-1 | Unmodified liquid diene-based rubber (B'-1) | 30 | 100 | 10 | -94 | 40 | 0 |
| Production Example 2-1 | Unmodified liquid diene-based rubber (B'-2) | 6 | 100 | 65 | -49 | 5 | 0 |
| Production Example 3-1 | Unmodified liquid diene-based rubber (B'-3) | 6 | 37 | 44 | -48 | 5 | 0 |
| Production Example 4-1 | Unmodified liquid diene-based rubber (B'-4) | 6 | 100 | 27 | -85 | 1 | 0 |

Examples 1 to 11 and Comparative Examples 1 to 7

According to the blending ratios (parts by mass) shown in Table 2 (examples) and Table 3 (comparative examples), components other than a vulcanizing agent (sulfur) and a vulcanization accelerator (in the examples, the solid rubber (A), the modified liquid diene-based rubber (B), the filler (C), TDAE, the silane coupling agent, zinc oxide, stearic acid, and an antidegradant) were charged into a closed-type Banbury mixer and kneaded for 4 minutes starting at an initial temperature of 60°C, and controlled so that the resin temperature reached 155 to 160°C, then discharged from the mixer and cooled to room temperature. Subsequently, the mixture was again charged into the Banbury mixer, the vulcanizing agent (sulfur) and the vulcanization accelerator were added thereto, and the mixture was kneaded for 75 seconds at an initial temperature of 50°C and a final temperature of 100°C, thereby obtaining a rubber composition.

The obtained rubber composition was press-molded (150°C, 20 to 40 minutes) to prepare a vulcanized rubber sheet (thickness: 2 mm) and a test piece for a flexural crack growth test, and the hardness, low fuel consumption performance, and resistance to flexural fatigue were evaluated based on the following methods. The results are shown in Tables 2 and 3.

Note that the measurement methods of each evaluation are as follows.

(Hardness)

Using the vulcanized rubber sheet obtained by press molding the rubber composition prepared in each of the examples and comparative examples, the hardness was measured with a Type A durometer with reference to JIS K6253:2023.

(Low fuel consumption performance)

A test piece of 40 mm in length $\times$ 5 mm in width was cut out from the sheet of the rubber composition prepared in

each of the examples and comparative examples, and tanδ was measured using a dynamic viscoelasticity measuring apparatus manufactured by GABO Werkstofftechnik GmbH under the conditions of a measurement temperature of 60°C, a frequency of 10 Hz, a static strain of 10%, and a dynamic strain of 2%, and the measured value was taken as an index of low fuel consumption performance. The numerical value of each of the examples and comparative examples is expressed as a relative value, with the value of Comparative Example 1 in Table 2 taken as 100. Note that the smaller the numerical value, the better the low fuel consumption performance of the rubber composition.

(Resistance to flexural fatigue)

A flexural crack growth test was performed in accordance with JIS K 6260:2017. Using the test piece described above, the number of flexing cycles required for the crack length to grow to an intermediate value (from (L+2) mm to (L+6) mm) was determined based on the crack length measured at each flexing cycle. The numerical value of each of the examples and comparative examples in Table 2 is expressed as a relative value, with the value of Comparative Example 1 taken as 100. Note that the larger the numerical value, the better the resistance to flexural fatigue.

[Table 2]

| | Example 1 | Example 2 | Example 3 | Example 4 | Example 5 | Example 6 |
|---|---|---|---|---|---|---|
| Natural rubber | 40 | 40 | 40 | 40 | 40 | 40 |
| Butadiene rubber | 60 | 60 | 60 | 60 | 60 | 60 |
| Silica 1 | 30 | 30 | 30 | 30 | 30 | 40 |
| Carbon black | 2 | 2 | 2 | 2 | 2 | 2 |
| Silane coupling agent | 1.3 | 1.3 | 1.3 | 1.3 | 1.3 | 1.7 |
| TDAE | 0 | 2 | 0 | 0 | 0 | 5 |
| Modified liquid diene-based rubber (B-1) | 5 | 10 | 14 | | | |
| Modified liquid diene-based rubber (B-2) | | | | 10 | 14 | 14 |
| Modified liquid diene-based rubber (B-3) | | | | | | |
| Modified liquid diene-based rubber (B-4) | | | | | | |
| Modified liquid diene-based rubber (B'-1) | | | | | | |
| Modified liquid diene-based rubber (B'-2) | | | | | | |
| Modified liquid diene-based rubber (B'-3) | | | | | | |
| Modified liquid diene-based rubber (B'-4) | | | | | | |
| Antidegradant | 2 | 2 | 2 | 2 | 2 | 2 |
| Stearic acid | 3 | 3 | 3 | 3 | 3 | 3 |
| Zinc oxide | 3 | 3 | 3 | 3 | 3 | 3 |
| Sulfur | 1.65 | 1.55 | 1.4 | 1.6 | 1.55 | 1.55 |
| Vulcanization accelerator (1) | | | | | | |
| Vulcanization accelerator (2) | 0.7 | 0.7 | 0.7 | 0.7 | 0.7 | 0.7 |
| Vulcanization accelerator (3) | 0.23 | 0.23 | 0.23 | 0.23 | 0.23 | 0.23 |
| Hardness | 49 | 46 | 46 | 47 | 45 | 44 |

(continued)

| | Example 1 | Example 2 | Example 3 | Example 4 | Example 5 | Example 6 |
|---|---|---|---|---|---|---|
| Low fuel consumption performance | 61 | 69 | 73 | 63 | 65 | 71 |
| Resistance to flexural fatigue | 259 | 4649 | >10000 | 691 | >10000 | 1578 |

Table 2 (continued)

| | Example 7 | Example 8 | Example 9 | Example 10 | Example 11 |
|---|---|---|---|---|---|
| Natural rubber | 40 | 40 | 40 | 30 | 50 |
| Butadiene rubber | 60 | 60 | 60 | 70 | 50 |
| Silica 1 | 20 | 30 | 30 | 30 | 30 |
| Carbon black | 2 | 2 | 2 | 2 | 2 |
| Silane coupling agent | 0.87 | 1.3 | 1.3 | 1.3 | 1.3 |
| TDAE | 0 | 0 | 0 | 0 | 0 |
| Modified liquid diene-based rubber (B-1) | | | | | |
| Modified liquid diene-based rubber (B-2) | 14 | | | 14 | 14 |
| Modified liquid diene-based rubber (B-3) | | 10 | | | |
| Modified liquid diene-based rubber (B-4) | | | 10 | | |
| Modified liquid diene-based rubber (B'-1) | | | | | |
| Modified liquid diene-based rubber (B'-2) | | | | | |
| Modified liquid diene-based rubber (B'-3) | | | | | |
| Modified liquid diene-based rubber (B'-4) | | | | | |
| Antidegradant | 2 | 2 | 2 | 2 | 2 |
| Stearic acid | 3 | 3 | 3 | 3 | 3 |
| Zinc oxide | 3 | 3 | 3 | 3 | 3 |
| Sulfur | 1.55 | 1.5 | 1.6 | 1.55 | 1.55 |
| Vulcanization accelerator (1) | | | | | |
| Vulcanization accelerator (2) | 0.7 | 0.7 | 0.7 | 0.7 | 0.7 |
| Vulcanization accelerator (3) | 0.23 | 0.23 | 0.23 | 0.23 | 0.23 |
| Hardness | 41 | 47 | 44 | 44 | 44 |
| Low fuel consumption performance | 52 | 63 | 57 | 67 | 61 |
| Resistance to flexural fatigue | 275 | 2052 | 176 | 117 | 1133 |

[Table 3]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Natural rubber | 40 | 40 | 40 | 40 | 40 | 40 | 40 |
| Butadiene rubber | 60 | 60 | 60 | 60 | 60 | 60 | 60 |
| Carbon black | 39 | 2 | 2 | 2 | 2 | 2 | 2 |
| Silica 1 | | 30 | 30 | 30 | 30 | 30 | 30 |
| Silane coupling agent | | 1.3 | 1.3 | 1.3 | 1.3 | 1.3 | 1.3 |
| TDAE | 5 | 5 | 5 | 2 | 0 | 0 | 0 |
| Modified liquid diene-based rubber (B-1) | | | | | | | |
| Modified liquid diene-based rubber (B-2) | | | | | | | |
| Modified liquid diene-based rubber (B-3) | | | | | | | |
| Modified liquid diene-based rubber (B-4) | | | | | | | |
| Modified liquid diene-based rubber (B'-1) | | | | 10 | | | |
| Modified liquid diene-based rubber (B'-2) | | | | | 8 | | |
| Modified liquid diene-based rubber (B'-3) | | | | | | 8 | |
| Modified liquid diene-based rubber (B'-4) | | | | | | | 8 |
| Antidegradant | 2 | 2 | 2 | 2 | 2 | 2 | 2 |
| Stearic acid | 3 | 3 | 3 | 3 | 3 | 3 | 3 |
| Zinc oxide | 3 | 3 | 3 | 3 | 3 | 3 | 3 |
| Sulfur | 1.7 | 1.2 | 1.6 | 3.8 | 3 | 3 | 3.3 |
| Vulcanization accelerator (1) | 0.5 | | | | | | |
| Vulcanization accelerator (2) | | 1 | 1 | 0.7 | 0.7 | 0.7 | 0.7 |
| Vulcanization accelerator (3) | | 0.33 | 0.33 | 0.23 | 0.23 | 0.23 | 0.23 |
| Hardness | 45 | 46 | 48 | 45 | 46 | 46 | 46 |
| Low fuel consumption performance | 100 | 56 | 47 | 55 | 52 | 55 | 51 |
| Resistance to flexural fatigue | 100 | 97 | 24 | 7 | 34 | 52 | 28 |

Industrial Applicability

Even when the rubber composition for a sidewall of the present invention contains a filler (silica) having a relatively large particle diameter, it can produce a sidewall having excellent resistance to flexural fatigue and improved low fuel consumption performance. Therefore, the rubber composition for a sidewall of the present invention is useful.

## Claims

1. A rubber composition for a sidewall, the rubber composition comprising: 0.1 to 30 parts by mass of a modified liquid diene-based rubber (B) having a functional group derived from a silane compound represented by the following Formula (1); and 5 to 80 parts by mass of a filler (C), with respect to 100 parts by mass of a solid rubber (A) containing natural rubber and/or isoprene rubber (A1) and butadiene rubber (A2),

   wherein the filler (C) comprises silica (C1), and a BET specific surface area of the silica (C1) is less than 170 ($m^2/g$), and
   the modified liquid diene-based rubber (B) satisfies the following (i) to (iii):

   (i) a weight average molecular weight (Mw) is 3,000 or more and 120,000 or less,
   (ii) a vinyl content is 70 mol% or less, and
   (iii) an average number of functional groups derived from the silane compound per molecule of the modified liquid diene-based rubber (B) is 1 to 20,

   [Chem. 1]

   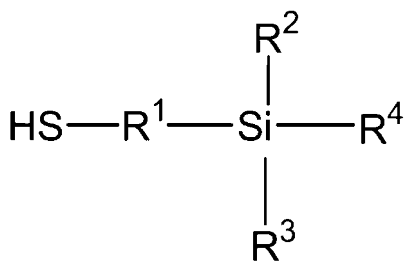

   (1)

   in Formula (1), $R^1$ is a divalent alkylene group having 1 to 6 carbon atoms, and $R^2$, $R^3$, and $R^4$ each independently represent a methoxy group, an ethoxy group, a phenoxy group, a methyl group, an ethyl group, or a phenyl group, provided that at least one of $R^2$, $R^3$, and $R^4$ is a methoxy group, an ethoxy group, or a phenoxy group.

2. The rubber composition for a sidewall according to claim 1, wherein the modified liquid diene-based rubber (B) has a melt viscosity at 38°C of 0.1 to 4,000 Pa·s.

3. The rubber composition for a sidewall according to claim 1 or 2, wherein the filler (C) further comprises carbon black (C2).

4. The rubber composition for a sidewall according to any one of claims 1 to 3, wherein a mass ratio (A1)/(A2) of the natural rubber and/or the isoprene rubber (A1) to the butadiene rubber (A2) contained in the solid rubber (A) is 20/80 or more and 60/40 or less.

5. A crosslinked product obtained by crosslinking the rubber composition for a sidewall according to any one of claims 1 to 4.

6. A sidewall formed at least in part from the rubber composition for a sidewall according to any one of claims 1 to 5.

**INTERNATIONAL SEARCH REPORT**

International application No.
**PCT/JP2024/024599**

**A. CLASSIFICATION OF SUBJECT MATTER**

***C08L 9/00***(2006.01)i; ***B60C 1/00***(2006.01)i; ***C08F 8/34***(2006.01)i; ***C08F 8/42***(2006.01)i; ***C08K 3/04***(2006.01)i; ***C08K 3/36***(2006.01)i; ***C08L 7/00***(2006.01)i; ***C08L 15/00***(2006.01)i
FI: C08L9/00; C08L7/00; C08L15/00; C08K3/36; C08K3/04; C08F8/34; C08F8/42; B60C1/00 B

According to International Patent Classification (IPC) or to both national classification and IPC

**B. FIELDS SEARCHED**

Minimum documentation searched (classification system followed by classification symbols)

C08L9/00; B60C1/00; C08F8/34; C08F8/42; C08K3/04; C08K3/36; C08L7/00; C08L15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/044893 A1 (KURARAY CO., LTD.) 07 March 2019 (2019-03-07) claims, example 1 | 1-6 |
| A | US 2015/0119528 A1 (CHINA PETROLEUM & CHEMICAL) 30 April 2015 (2015-04-30) entire text | 1–6 |
| A | WO 2021/054429 A1 (KURARAY CO., LTD.) 25 March 2021 (2021-03-25) entire text | 1–6 |
| A | WO 2019/172185 A1 (KURARAY CO., LTD.) 12 September 2019 (2019-09-12) entire text | 1–6 |
| A | JP 2015-174954 A (TOYO TIRE & RUBBER CO., LTD.) 05 October 2015 (2015-10-05) entire text | 1–6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/024599**

| Patent document cited in search report | Publication date (day/month/year) | Patent family member(s) | Publication date (day/month/year) |
|---|---|---|---|
| WO 2019/044893 A1 | 07 March 2019 | US 2020/0254816 A1<br>claims, example 1<br>EP 3677638 A1 | |
| US 2015/0119528 A1 | 30 April 2015 | CN 104558414 A | |
| WO 2021/054429 A1 | 25 March 2021 | (Family: none) | |
| WO 2019/172185 A1 | 12 September 2019 | US 2021/0017320 A1<br>entire text<br>EP 3763744 A1 | |
| JP 2015-174954 A | 05 October 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019044892 A
- JP 2008120895 A